# EUROPEAN PATENT APPLICATION

(11) **EP 4 617 619 A1**
(43) Date of publication of application: **17.09.2025**
(21) Application number: 25156866.3
(22) Date of filing: 10.02.2025
(51) Int. Cl.: G01B 11/25, G01N 21/95

(54) **APPARATUSES AND METHODS FOR LARGE AREA WIRELESS FUSELAGE DENT INSPECTION**

(30) Priority: 11.03.2024 US 202418601766
(71) Applicant: The Boeing Company, Arlington, VA 22202 (US)
(72) Inventor: CARDON, Lisa A., Arlington, 22202 (US); SHEHAB, Shereef G., Arlington, 22202 (US); BABST, Joshua A., Arlington, 22202 (US); WOEHRLIN, Keith C., Arlington, 22202 (US); KASPER, Kristine M., Arlington, 22202 (US); JOHNSON, Matthew C., Arlington, 22202 (US); MORIHARA, Richard H., Arlington, 22202 (US)
(74) Representative: Boult Wade Tennant LLP

(57) **Abstract**

The present disclosure provides an inspection cart for inspecting large area objects, such as airplane fuselages. In some examples, an inspection cart includes a tower supporting a track. The inspection cart also includes a carriage movable along the track. The carriage supports a 3D scanner having at least two cameras and a projector. The inspection cart also includes integrated optical fiducials arranged relative to the track so that the optical fiducials are in a field of view of the 3D scanner during scanning of an object. In other examples, an inspection system that includes at least one inspection cart is provided. In further examples, a method of inspecting a large area object using an inspection cart is provided.

## Description

### FIELD

The present disclosure relates to apparatuses, systems, and methods of inspecting large area objects, such as airplane fuselages.

### BACKGROUND

Conventionally, inspection of airplane fuselages for defects has been a manual process involving flashlights and bump caps, dependent on human eyesight and meticulousness. Accordingly, inspecting an airplane fuselage for defects has traditionally been quite time consuming. Moreover, airplane fuselages are usually inspected during final assembly while the airplane fuselage is coated in a green Temporary Protective Coating (TPC), which can obstruct the view of many defects. Consequently, some defects can go undiscovered until a later stage, such as after a shiny final paint job is applied on an airplane's fuselage. Rework to fix such undetected defects at such a stage can be costly. In some instances, for example, a cockpit or lavatory may need to be removed from the fuselage in order to pull out dents that went undetected during final assembly. Currently-available scanners and vision systems have been of little help in automating the inspection process as they are relatively small, localized, and take too long to process images.

### SUMMARY

The present disclosure provides a method. The method includes translating a 3D scanner relative to a target object, the 3D scanner is arranged in an inspection cart; scanning, as the 3D scanner is translated, the target object using the 3D scanner to capture images of at least a slice of the target object, wherein optical fiducials integrated into the inspection cart are arranged in a field of view of the 3D scanner during the scanning; stitching together the captured images of the target object obtained during the scanning to create a slice image, the captured images being stitched together according to position targets provided by the optical fiducials; and detecting one or more defects on the target object based on the slice image.

The method may include projecting, by the 3D scanner, one or more defect indicators onto the target object to indicate respective ones of the one or more defects detected on the target object.

At least one defect indicator of the one or more defect indicators may be projected onto the target object outlining a defect of the one or more defects detected on the target object.

The 3D scanner may be translated along a linear path that is oriented at an angle relative to a vertical direction.

The optical fiducials may include a first fiducial rail and a second fiducial rail that are spaced from one another and arranged parallel to the linear path.

The position targets may be arranged on first fingers that extend from the first fiducial rail and on second fingers that extend from the second fiducial rail, the first fingers may be spaced from one another along the first fiducial rail and the second fingers may be spaced from one another along the second fiducial rail.

The method may include masking the optical fiducials in the slice image so that the optical fiducials do not appear on the slice image.

The slice of the target object may be a first slice, and wherein the method may further include: a) moving the inspection cart so that the inspection cart aligns with a subsequent slice of the target object; b) translating, with the inspection cart aligned with the subsequent slice, the 3D scanner relative to the target object; c) scanning, as the 3D scanner is translated with the inspection cart aligned with the subsequent slice, the target object using the 3D scanner to capture images of the subsequent slice of the target object, wherein the optical fiducials are arranged in the field of view of the 3D scanner during the scanning of the subsequent slice; d) stitching together captured images of the subsequent slice of the target object to create a subsequent slice image, the captured images of the subsequent slice being stitched together according to the position targets provided by the optical fiducials; and e) detecting one or more defects on the subsequent slice of the target object based on the subsequent slice image.

The method may further include iterating a) through e) for a predetermined length of the target object; and stitching the slice image of the first slice and subsequent slice image of each one of the subsequent slices into a combined slice image.

The combined slice image may be a first combined slice image associated with a first side of the target object, and wherein the method may further include creating a second combined slice image associated with a second side of the target object.

The method may include creating a digital twin of the target object based at least in part on the first combined slice image and the second combined slice image.

The inspection cart may move autonomously from one slice of the target object to another.

The target object may be a fuselage, and wherein the fuselage may be scanned so that the captured images of the slice extend from a midline of an underbelly of the fuselage to a window line of the fuselage.

The target object may be a fuselage, and wherein the fuselage may be scanned so that the captured images of the slice extend from a midline of an underbelly of the fuselage to a midline of a top of the fuselage.

The present disclosure provides an inspection system. The inspection system includes an inspection cart. The inspection cart includes a tower supporting a track. The inspection cart further includes a carriage movable along the track, the carriage supporting a 3D scanner having at least two cameras and a projector. Further, the inspection cart includes optical fiducials arranged relative to the track so that the optical fiducials are in a field of view of the 3D scanner during scanning of a target object.

The inspection system may further include one or more processors and one or more non-transitory memory devices storing a program, which, when executed by any combination of the one or more processors, causes the one or more processors to perform an operation. The operation may include causing the carriage to move along the track so that the 3D scanner is moved relative to the target object, causing, as the 3D scanner is translated, the 3D scanner to scan the target object to capture images of at least a slice of the target object; stitching together the captured images of the slice of the target object to create a slice image, the captured images being stitched together according to position targets provided by the optical fiducials; and detecting one or more defects on the target object based on the slice image.

The operation may further include causing the projector of the 3D scanner to project one or more defect indicators onto the target object to indicate respective ones of the one or more defects detected on the target object.

The track may be a linear track and the optical fiducials may include a first fiducial rail and a second fiducial rail that are spaced from one another and arranged parallel to the linear track.

The target object may be a fuselage, and wherein the track may be a curved track that extends above and below the fuselage.

The present disclosure provides an inspection cart. The inspection cart includes a tower supporting a track; a carriage movable along the track, the carriage supporting a 3D scanner having at least two cameras and a projector; and optical fiducials arranged relative to the track so that the optical fiducials are in a field of view of the 3D scanner during scanning of a target object.

### BRIEF DESCRIPTION OF THE DRAWINGS

So that the manner in which the above recited features can be understood in detail, a more particular description, briefly summarized above, may be had by reference to examples, some of which are illustrated in the appended drawings.
FIG. 1 is a forward-looking-aft perspective view of an inspection cart.
FIG. 2 is an aft-looking-forward perspective view of the inspection cart of FIG. 1.
FIG. 3 is a side view of the inspection cart of FIG. 1.
FIG. 4 is a system diagram of an inspection system.
FIG. 5 is a flow diagram for an example method of inspecting a target object using an inspection system.
FIG. 6 is a schematic side view of a fuselage of an airplane showing one example manner in which the fuselage can be divided into slices.
FIGS. 7 and 8 depict an inspection cart positioned relative to a slice of a port side of the fuselage and performing a scan thereof.
FIG. 9 depicts a plurality of images of the slice of the fuselage captured during the scan depicted in FIGS. 7 and 8.
FIG. 10 shows a combined slice image stitched together from the images of the slice depicted in FIG. 9.
FIG. 11 shows a defect indicator being projected by a projector of a 3D scanner onto a fuselage.
FIG. 12 shows a plurality of slice images each associated with one of the predefined slices of a fuselage, wherein the slice images are stitched together into a combined slice image.
FIG. 13 depicts a forward-looking-aft view of a fuselage and shows a first inspection cart and a second inspection cart scanning and capturing images of respective sides of the fuselage.
FIG. 14 is a perspective view of an inspection cart having a siege tower in a scanner/motivator configuration.
FIG. 15 is a perspective view of another inspection cart having a siege tower in a rollercoaster-style conveyer configuration.

### DETAILED DESCRIPTION

The present disclosure relates to improved apparatuses, systems, and methods of inspection of airplane fuselages. Particularly, the apparatuses, systems, and methods disclosed herein facilitate detection of defects on airplane fuselages, e.g., in real time. The apparatuses and methods of the present disclosure can be utilized for inspection of an airplane fuselage at various life cycle stages, such as at final assembly, at delivery, or even after an airplane has been fielded (e.g., for an inspection after a hail storm). Although the inspection apparatuses, systems, and methods are described herein in the context of inspecting airplane fuselages, the examples of the present disclosure are also applicable to inspecting other large area objects, such as other areas of the airplane (e.g., wings, cockpit, tail empennage, etc.), ships, spacecraft, trains, industrial pipes, etc.

In some examples, an inspection cart of an inspection system is provided that facilitates inspection of airplane fuselages by detecting skin defects, e.g., in real time. The inspection cart is mobile and includes a tower supporting a track. The inspection cart also includes a carriage movable along the track. The carriage supports a 3D scanner having at least two cameras and a projector. The inspection cart also includes integrated optical fiducials arranged relative to the track so that the optical fiducials are in a field of view of the 3D scanner during scanning of the fuselage. In this regard, the optical fiducials are integrated into the inspection cart. During inspection of a fuselage, the 3D scanner can be translated along the track. As the 3D scanner is translated, the 3D scanner captures images of at least a slice of the fuselage. The integrated optical fiducials are arranged in a field of view of the 3D scanner during the scanning. The captured images can be stitched together to create a slice image. The captured images are stitched together according to position targets provided by the optical fiducials. One or more defects on the fuselage can be detected based on the slice image. Detected defects can be presented to an operator during a scan of a slice or right after a slice has been scanned. Particularly, one or more defect indicators can be projected onto the fuselage to indicate the locations of the defects. This may allow an operator to immediately appreciate the defects and their respective locations on the fuselage. Other alerts or reports identifying the defects are also possible, such as real time presentation of the identified defects on a display, audio alerts, automatically generated reports, etc. This process can be repeated for other slices of the fuselage and the slice images can be stitched together to form a combined slice image. In some examples, multiple inspection carts can be utilized to scan different sections of a fuselage simultaneously.

The inspection carts, inspection systems, and methods of the present disclosure can provide certain advantages, benefits, and/or technical effects. For instance, manual inspection of a fuselage to detect defects (e.g., dents, missing parts, unacceptable tolerances, etc.) can be eliminated or largely replaced by the apparatuses and methods provided herein. Eliminating or reducing the need for manual inspection can allow for fewer escapes, lower costs, greater repeatability, precision and accuracy of detected defects, improved quality and safety, reduced inspection time, elimination or reduction of ergonomic challenges to operators (e.g., head injuries on the underside of a fuselage, repetitive stress (awkward postures), eye strain, and noise. Further, the optical fiducials are integrated into the inspection cart, which allows for contactless inspection of a fuselage. Accordingly, the fuselage need not be touched or contacted to arrange optical targets thereon. Optical fiducials have traditionally been placed on a target part or a fixture holding the target part, e.g., with stickers in known positions. The setup and cleanup of this traditional technique would be time consuming and cost prohibitive for large target parts, such as airplane fuselages.

In addition, defects can be detected and their positions can be made immediately known to an operator, e.g., by projecting defect indicators onto the airplane's fuselage. An operator can use the indicators to mark the aircraft, as desired, e.g., with tape or the like. Moreover, the carriage that carries the 3D scanner can be driven in a controlled motion with the optical fiducials being at a known distance and in the field of view of the cameras. The 3D scanner can use position targets on the "fingers" and/or fiducial rails to determine its relative position, which assists in stitching together captured images for a slice image of the fuselage. Further, the inspection cart is mobile and thus can be moved (e.g., manually or autonomously) from one capture position to the next to capture different slices of the fuselage. The slice images can be stitched together to create a combined slice image, e.g., of the length of the airplane's fuselage. The slice images and/or combined slice image can be used to generate a digital twin of the fuselage, which can be used, among other possible uses, as a baseline for comparison purposes with future scans of the fuselage. In addition, the slice images and/or combined slice image can be used by predictive assembly systems to make assembly predictions, such as predictions as to how to address one or more of the detected defects, e.g., by adding a shim, machining a surface, etc.

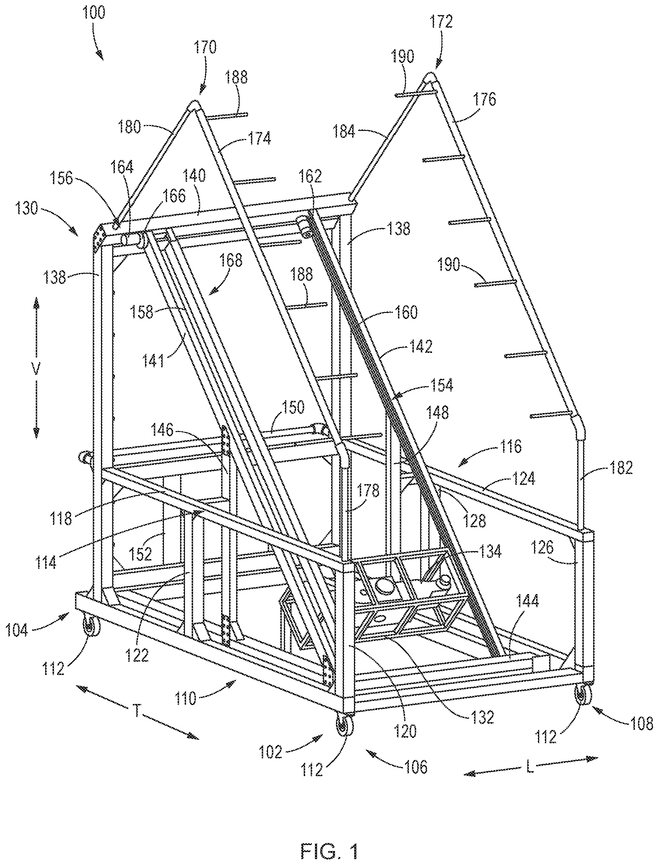

Turning now to the drawings, FIGS. 1, 2, 3 provide various views of an inspection cart 100 according to examples of the present disclosure. For reference, the inspection cart 100 defines a transverse direction T, a lateral direction L, and a vertical direction V, which are mutually perpendicular to one another and form an orthogonal direction system. The inspection cart 100 has a forward end 102 and an aft end 104. The forward end 102 and the aft end 104 are spaced from one another along the transverse direction T. The inspection cart 100 also has a first side 106 and a second side 108. The first side 106 is spaced from the second side 108 along the lateral direction L.

The inspection cart 100 has a chassis 110 to which a plurality of casters 112 are mounted. The casters 112 enable the inspection cart 100 to be moved. The chassis 110 is formed by a plurality of frame members and has a rectangular configuration. The inspection cart 100 also has a first side mount 114 and a second side mount 116, which both are connected to and supported by the chassis 110. The first side mount 114 includes a first side rail 118, a first forward post 120, and a first intermediate post 122. Likewise, the second side mount 116 includes a second side rail 124, a second forward post 126, and a second intermediate post 128. The first and second side rails 118, 124 are each arranged at an ergonomically-friendly height where an adult of average height can easily grasp, and if desired, manually move the inspection cart 100 by pushing or pulling one or both of the first and second side rails 118, 124.

The inspection cart 100 also has a tower 130 that structurally supports a translating carriage 132 that carries a 3D scanner 134. The tower 130 includes, among other things, a first tower post 136, a second tower post 138, a tower cross member 140 extending between and connecting the first and second tower posts 136, 138 at their top ends. The tower 130 also includes a first angled frame 141 and a second angled frame 142. The first angled frame 141 and the second angled frame 142 are coupled to the tower cross member 140 at a top of the tower 130 and to a chassis cross member 144 at a bottom of the tower 130. The tower 130 also includes a first intermediate tower post 146 and a second intermediate tower post 148 that support the mid-spans of the first and second angled frames 141, 142. The first side rail 118 and the second side rail 124 connect respectively to the first tower post 136 and the second tower post 138. An aft handle bar 150 is connected to the first and second tower posts 136, 138, and offers an ergonomically-friendly bar for a user to grasp and move the inspection cart 100 manually. The aft handle bar 150 also advantageously extends out over a controls cabinet 152, e.g., for providing protection thereto. The controls cabinet 152 can store various power, communication, and computing equipment associated with operating the inspection cart 100.

The tower 130 also includes a track 154 and a drive system 156 that functions to translate or move the carriage 132 along the track 154. The track 154 includes a first-side rail 158 and a second-side rail 160 coupled respectively with the first and second angled frames 141, 142. The track 154 is a linear track in this and certain other examples. In this regard, the first-side and the second-side rails 158, 160 are linear. In some examples, the first-side and the second-side rails 158, 160 can include end stops at their respective top and/or bottom ends, e.g., to provide a failsafe for the carriage and/or 3D scanner 134 carried therein. In some examples, the end stops can be shock absorbers placed at the bottom of the first-side rail 158 and/or the second-side rail 160. In other examples, the end stops can be compression springs placed at the bottom of the first-side rail 158 and/or the second-side rail 160. In yet other examples, the end stops can be elastomer stop buffers placed at the top of the first-side rail 158 and/or the second-side rail 160. An elastomer stop buffer 162 is shown in FIG. 1 being arranged at a top of the second-side rail 160.

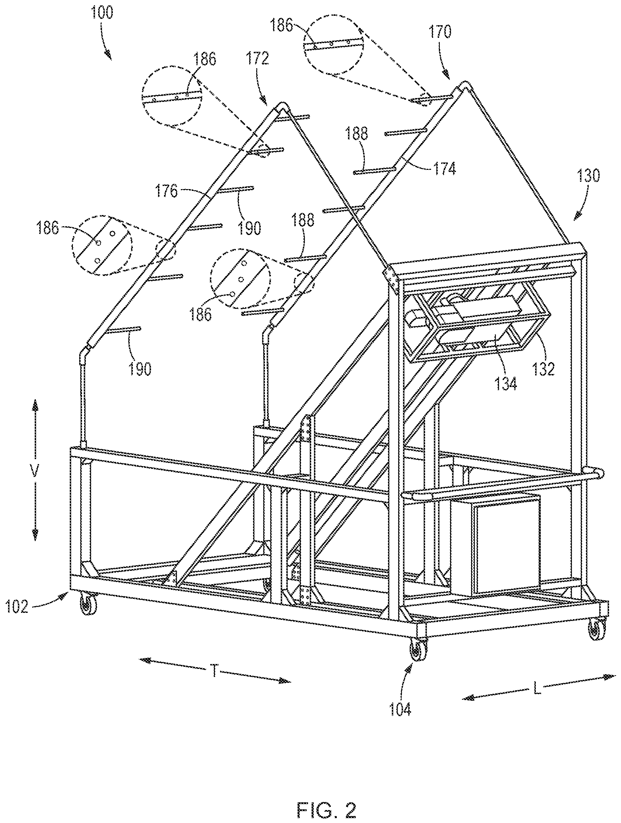

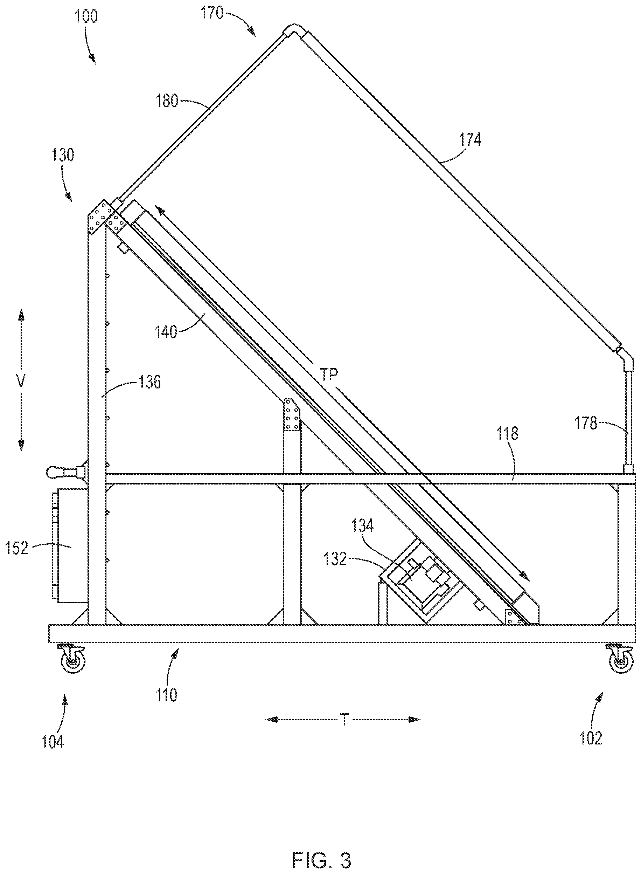

The drive system 156 is a belt drive system in this and certain other examples and includes, among other things, an electric motor 164, a gearbox 166 mechanically coupled with the electric motor 164, and a belt pulley system 168 mechanically coupled with the gearbox 166. The carriage 132 may be slidably received within the track 154 and the drive system 156 can be controlled to translate the carriage 132 along the track 154, and consequently, the 3D scanner 134 as well. The carriage 132 is translated along the track 154 between a first position (e.g., a bottom position) and a second position (e.g., a top position). The carriage 132 is shown in the bottom or first position in FIGS. 1 and 3 while the carriage 132 is shown in the top or second position in FIG. 2. Accordingly, the 3D scanner 134 can be translated along a translating path TP (FIG. 3), which is a linear path that is oriented at an angle relative to the vertical direction V in this and certain other examples. In some examples, the translating path TP can be oriented at a forty-five degree angle (45°) with respect to the vertical direction V. However, the translating path TP can be oriented at other angles, such as thirty degrees (30°) or sixty degrees (60°) in other examples.

The inspection cart 100 also includes optical fiducials that are arranged in a Field Of View (FOV) of the 3D scanner 134 during scanning of a target object, such as an airplane fuselage. In this and certain other examples, the optical fiducials include a first optical fiducial 170 and a second optical fiducial 172. The first optical fiducial 170 includes a first fiducial rail 174 and the second optical fiducial 172 includes a second fiducial rail 176. The first and second fiducial rails 174, 176 are spaced from one another, e.g., along the lateral direction L, and are arranged parallel to the translating path TP, or rather, parallel to a translating angle of the 3D scanner 134. The first fiducial rail 174 and the second fiducial rail 176 are both spaced from the track 154, e.g., along a direction that is perpendicular to the translating path TP. A bottom end of the first fiducial rail 174 is supported by a first forward-support post 178, which is connected to the first side mount 114 and extends lengthwise along the vertical direction V. A top end of the first fiducial rail 174 is connected to a first aft-support post 180, which is connected to the tower cross member 140 and extends lengthwise along a direction that is perpendicular to the translating path TP. Similarly, a bottom end of the second fiducial rail 176 is supported by a second forward-support post 182, which is connected to the second side mount 116 and extends lengthwise along the vertical direction V. A top end of the second fiducial rail 176 is connected to a second aft-support post 184, which is connected to the tower cross member 140 and extends lengthwise along a direction that is perpendicular to the translating path TP.

As shown in FIG. 2, the first optical fiducial 170 and the second optical fiducial 172 can include position targets 186. The position targets 186 may function to assist the 3D scanner 134 in determining its position as it translates during a scan of a target object and also enables captured images to be stitched together to form a combined image. In some examples, the position targets 186 can be located on the first and second fiducial rails 174, 176. Additionally or alternatively, the position targets 186 can be located on fingers of the first and second fiducial rails 174, 176. In some examples, the position targets 186 can be arranged on first fingers 188 that extend from the first fiducial rail 174 and on second fingers 190 that extend from the second fiducial rail 176. The first fingers 188 are spaced from one another along the first fiducial rail 174 and the second fingers 190 are spaced from one another along the second fiducial rail 176. The first and second fingers 188, 190 each extend from their respective first and second fiducial rails 174, 176 toward one another along the lateral direction L. In some examples, including the depicted example of FIG. 2, the position targets 186 are disposed on each of the first fingers 188 and along an entirety of the length of the first fiducial rail 174. Moreover, the position targets 186 are disposed on each of the second fingers 190 and along an entirety of the length of the second fiducial rail 176. The respective close-up views in FIG. 2 depict the position targets 186 on the noted features. The position targets 186 are arranged to face toward or otherwise be in the FOV of the 3D scanner 134.

The position targets 186 can be arranged in different patterns along the first and second fiducial rails 174, 176 and the first and second fingers 188, 190. The patterns and locations (e.g., coordinates relative to the 3D scanner 134) of the position targets 186 can be known to the 3D scanner 134 and/or a computing system associated with the inspection cart 100 so that the position targets 186 can be utilized to assist the 3D scanner 134 in determining its position as it translates during a scan of a target object and also for stitching captured images together. Advantageously, the first and second optical fiducials 170, 172 are integrated into the inspection cart 100 and have position targets 186 arranged in the FOV of the 3D scanner 134. In this way, the 3D scanner 134 can know or determine its position relative to the position targets 186-without any targets or markups being needed on the target object itself. This provides non-contact scanning capability.

FIGS. 1, 2, and 3 provide an inspection cart according to an example of the present disclosure. In some alternative examples, the inspection cart 100 of FIGS. 1, 2, and 3 can have other configurations. For example, the inspection cart 100 can be arranged on wheels that lock into a track, e.g., wherein the track extends along at least a portion of the target object, such as a full longitudinal length of a fuselage. The inspection cart 100 can be moved along the track to capture images of various "slices" of the fuselage. In yet other examples, the inspection cart 100 can be arranged to have one or more steered-wheels and, optionally, one or more non-steered wheels. In such examples, the inspection cart can include a steering device (e.g., a steering wheel, levers for zero-turn capability, etc.) and can have a motor or engine to propel the inspection cart 100. In this regard, the inspection cart 100 can be driven to desired locations for scanning. In some further examples, the inspection cart 100 can include self-driving or autonomous driving features that allow the cart to be moved autonomously, e.g., to various positions along a longitudinal length of a fuselage. In yet further examples, as will be explained in further detail herein, the inspection cart 100 can include a "siege tower", e.g., that enables a top quadrant of a fuselage to be scanned in addition to a bottom quadrant.

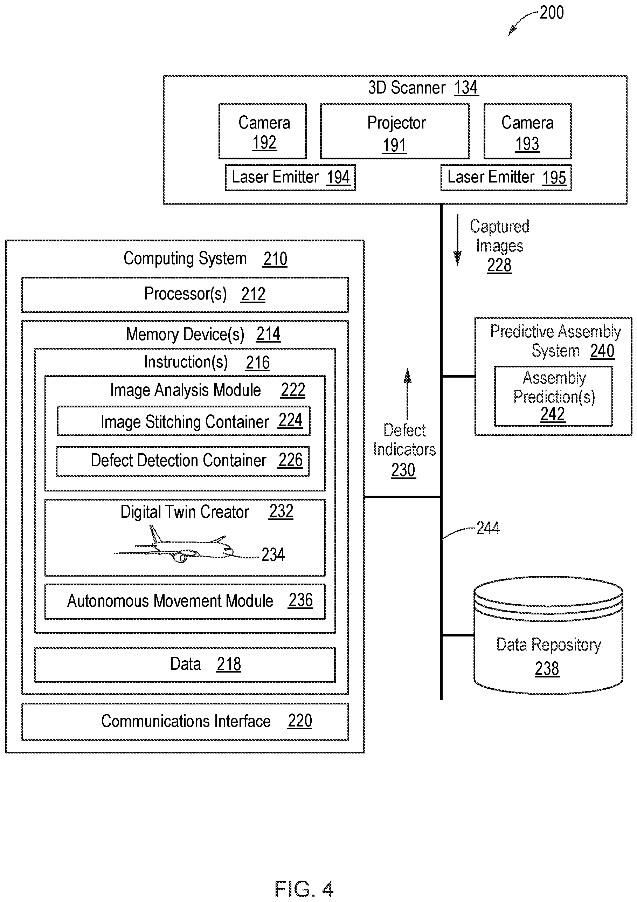

With reference now to FIG. 4, in some examples, the inspection cart 100 of FIGS. 1, 2, 3 can be a part of an inspection system 200. The inspection system 200 can include the inspection cart 100 (FIGS. 1-3) and a computing system 210, and can also include a data repository 238 and/or a predictive assembly system 240 in some examples. Other systems can also be communicatively coupled with the inspection system 200, e.g., via a communication bus 244.

As depicted in FIG. 4, the inspection cart 100 (FIGS. 1-3) includes the 3D scanner 134 that is translatable along the track 154 (FIG. 1). The 3D scanner 134 includes, among other things, at least two cameras and a projector 191. In this and certain other examples, the cameras include a first camera 192 and a second camera 193, which are arranged on opposite sides of the projector 191. The first and second cameras 192, 193 capture images of a target object as the 3D scanner 134 is translated along the track 154. As will be explained in greater detail herein, during a scan, the projector 191 can project light onto the target object to enhance the images captured by the first and second cameras 192, 193. Also, the projector 191 can be used to project defect indicators onto the target object to indicate respective detected defects. The 3D scanner 134 also includes a first laser emitter 194 and a second laser emitter 195, which are spaced from one another. The first and second laser emitters 194, 195 can emit lasers onto the target object, e.g., to ensure focal distances between the first and second cameras 192, 193 and the target object are within a predetermined range or specification. For instance, when lasers emitted respectively from the first and second laser emitters 194, 195 meet at a point, the focal distances can be determined to be in the predetermined range or specification. In this regard, the first and second laser emitters 194, 195 can be used to determine the inspection cart 100 has a suitable "standoff" with respect to the target object.

The 3D scanner 134 can be communicatively coupled with other systems onboard the inspection cart 100 (FIGS. 1-3), such as components within the controls cabinet 152 (FIG. 1) and/or onboard components of the computing system 210, and also to one or more offboard systems, such as to offboard components of the computing system 210, the data repository 238, the predictive assembly system 240, etc. In some examples, the computing system 210 can be positioned in part onboard and in part offboard of the inspection cart 100. In other examples, the computing system 210 can be positioned entirely onboard the inspection cart 100.

The computing system 210 can include one or more processors 212 and one or more non-transitory memory devices 214 that can store computer-readable instructions 216 or code that can be executed by the one or processors 212 to perform an operation, such as causing the first and second cameras 192, 193 to capture images of a target object as the 3D scanner 134 is moved along the track 154, stitching together captured images, and/or causing the projector 191 to project defect indicators onto the target object that correspond to detected defects. The instructions 216 can be software written in any suitable programming language or can be implemented in hardware. The one or more processors 212 and one or more non-transitory memory devices 214 can be embodied in one or computing devices, for example.

The one or more processor(s) 212 can include any suitable processing device, such as a microprocessor, microcontroller, integrated circuit, logic device, or other suitable processing device. The one or more memory device(s) 214 can include one or more computer-readable medium, including, but not limited to, non-transitory computer-readable medium, RAM, ROM, hard drives, flash drives, and other memory devices. The one or more memory device(s) 214 can store information accessible by the one or more processor(s) 212, including the instructions 216 that can be executed by the one or more processor(s) 212. The memory device(s) 214 can further store data 218 that can be accessed by the processors 212. For example, the data 218 can include images captured by the 3D scanner 134, known coordinates of the position targets 186 (FIG. 2), data relating to the target object, etc. The data 218 can include one or more table(s), function(s), algorithm(s), model(s), equation(s), etc. according to examples of the present disclosure.

The computing system 210 also include a communication interface 220 used to communicate, for example, with the other components of the inspection system 200. The communication interface 220 can include any suitable components for interfacing with one or more network(s), including for example, transmitters, receivers, ports, controllers, antennas, or other suitable components.

As further shown in FIG. 4, in some examples, the instructions 216 can include an image analysis module 222 that includes an image stitching container 224 and a defect detection container 226. The one or more processor(s) 212 of the computing system 210 can receive a plurality of captured images 228 from the 3D scanner 134 and can stitch the captured images together to create a slice image that represents a "slice" of the large area target object. Slice images can be merged or stitched together with other slice images of the target object to ultimately render a combined slice image of the target object. When the one or more processor(s) 212 of the computing system 210 execute the defect detection container 226, one or more defects on the target object can be detected in the slice image and/or combined slice image and/or merged image. In at least some examples, the coordinates of the defects can be determined and defect indicators 230 can be generated corresponding to the coordinates of the detected defects. The computing system 210 can cause the projector 191 of the 3D scanner 134 to project the defect indicators 230 onto the target object, e.g., with cross hairs, arrows, circles, etc. In some examples, at least one defect indicator can be projected onto the target object outlining a defect. That is, the projected defect indicator can outline a perimeter of the defect, which can make an area of a defect readily apparent to an operator reviewing the defects on the target object.

Furthermore, in some examples, the instructions 216 can include a digital twin creator 232. When the one or more processors of the computing system 210 execute the digital twin creator 232, a digital twin 234 of the target object can be created, e.g., with the defects noted on the target object. The digital twin 234 can digitally represent a portion of the target object (e.g., a lower quadrant of an airplane fuselage) or an entirety of a target object (e.g., an entirety of an airplane fuselage). The digital twin 234 can be used for a number of purposes, such as providing a baseline assessment of the target object at final assembly, which can be compared to future scans of the target object (e.g., after rework, at delivery, after being fielded, etc.). Moreover a digital twin 234 can be used for a number of other reasons.

In some additional examples, the instructions 216 can include an autonomous movement module 236. In such examples, the inspection cart 100 (FIGS. 1-3) can be an autonomous vehicle. In some examples, the inspection cart 100 can be a self-driving cart that can be driven about autonomously, or without human intervention. In other examples, the inspection cart 100 can be a self-guided cart that can move itself autonomously along a track, e.g., from one position to another. The autonomous movement module 236 can include logic needed to move the inspection cart 100 from one scan position to another, e.g., based on sensor feedback arranged on the inspection cart 100, such as sensor feedback from cameras positioned onboard the inspection cart 100.

The data repository 238 can store various captured images and/or stitched images of the target object, the digital twin 234, etc. Such features can be stored in memory for future use and analysis. The predictive assembly system 240 can be communicatively coupled with the other elements of the inspection system 200. The predictive assembly system 240 can call or receive captured and/or stitched images, the digital twin 234, etc., and with an appreciation of the detected defects, the predictive assembly system 240 can provide assembly predictions 242, such as a 3D geometry of a shim that can be placed at a joint between two interfacing components to provide enhanced mechanical properties to the joint. In this regard, an integrated approach to inspection and assembly can be achieved.

With the inspection system 200 of FIG. 4 described, an example manner in which the inspection system 200 can be used to inspect an airplane fuselage for defects will be provided below.

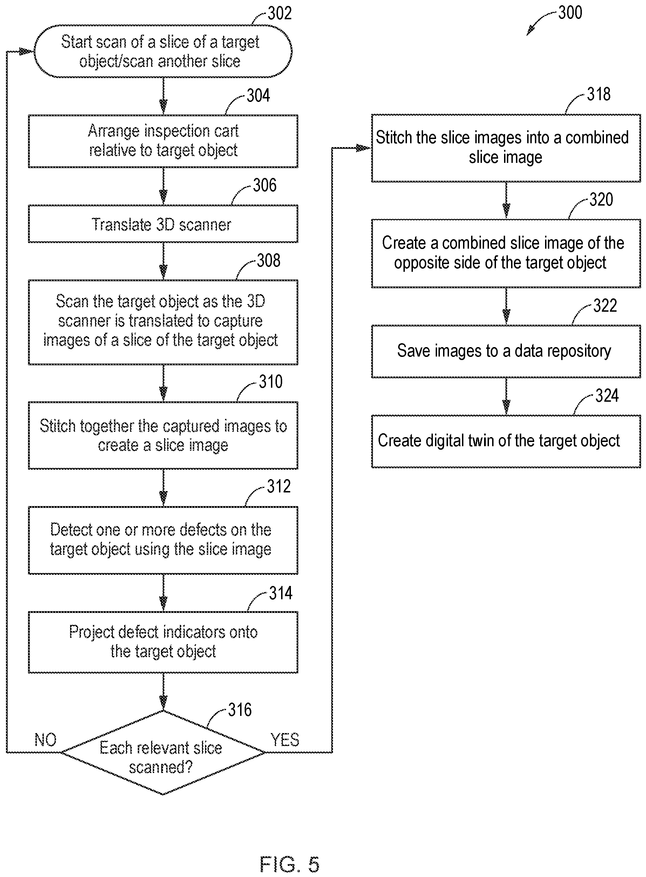

FIG. 5 is a flow diagram for an example method 300 of inspecting a target object using an inspection system. The method 300 will be explained in the context of the inspection system 200 of FIG. 4 inspecting an airplane fuselage. Accordingly, FIGS. 1 through 4 may also be referenced below in addition to FIG. 5. However, as will be appreciated, the method 300 can be implemented by inspection systems and inspection carts having different configurations than the inspection system 200 and the inspection cart 100 of FIGS. 1 through 4.

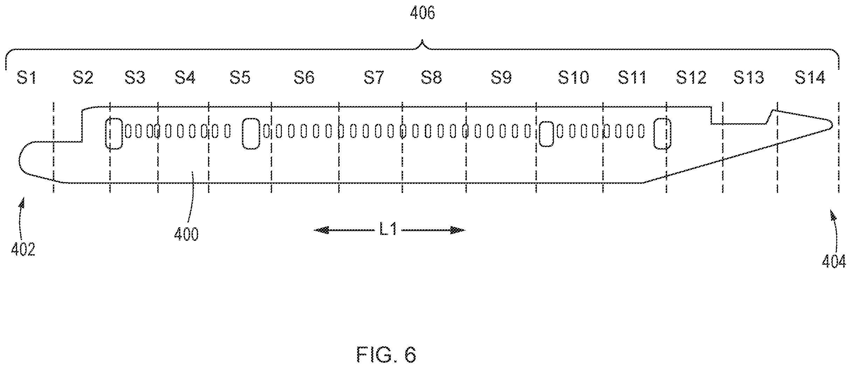

At 302, the method 300 can include commencing a scan of at least a slice of a target object, which is an airplane fuselage in this and certain other examples. Some airplane fuselages can be quite large in area relative to the FOV of the 3D scanner 134, and accordingly, the longitudinal length of an airplane fuselage can be scanned slice-by-slice. That is, an airplane fuselage can be divided into a plurality of slices along its longitudinal length. For example, FIG. 6 is a schematic side view of a fuselage 400 of an airplane showing one example manner in which the fuselage 400 can be divided into slices. The fuselage 400 has a forward end 402 and an aft end 404 and extends along a longitudinal direction L1. As illustrated, the fuselage 400 is divided into a plurality of slices 406, or in this example, slices S1 - S14, which represents fourteen (14) slices. The slices 406 are divided along the longitudinal direction L1. The slices 406 can cover the full longitudinal length of the fuselage 400 or a portion thereof. However, in other examples, the slices 406 can be divided along a portion of the longitudinal length of the fuselage 400.

The inspection cart 100 can be positioned relative to a given slice of the fuselage 400, the given slice can be scanned by the 3D scanner 134 to capture images of the given slice of the fuselage 400, and then the inspection cart 100 can be moved or repositioned relative to a subsequent slice (e.g., an adjacent slice) of the fuselage 400. With the inspection cart 100 positioned relative to the subsequent slice, the subsequent slice can be scanned by the 3D scanner 134 to capture images of the subsequent slice, and then repositioned relative to another subsequent slice. This process may iterate, e.g., until a full longitudinal length of the fuselage 400 has been scanned, e.g., slice-by-slice. In at least some examples, the slices 406 are defined with a smaller width than the FOV of the 3D scanner 134, e.g., so that the captured images of the slices (or slice images) overlap, which can be advantageous for stitching the slice images together into a combined slice image. As at least a part of the method 300 can be iterative (e.g., the scanning feature), a scan of a subsequent slice of the target object can also be commenced at 302.

At 304, the method 300 can include arranging the inspection cart of the inspection system relative to the target object. For instance, the inspection cart 100 can be arranged relative to a given slice of the fuselage 400 to be scanned. The inspection cart can be moved manually or the inspection cart 100 can move itself autonomously. In some examples, the inspection cart 100 can be arranged relative to the fuselage 400 by performing a "standoff process" to ensure the inspection cart 100 is at a suitable distance from the fuselage 400. In some example standoff processes, lasers can be emitted by the first and second laser emitters 194, 195 of the 3D scanner 134, and when the lasers meet at a point or within a predetermined distance of one another, the focal distances between the first and second cameras 192, 193 and the fuselage 400 can be determined to be in a predetermined range or specification. This can ensure that the cameras are positioned in a satisfactory position to capture images of the fuselage 400 during a scan. In at least some examples, the standoff process is performed for each slice of the fuselage 400 with the 3D scanner located in a same position along the track 154, e.g., a top position or a bottom position. This can facilitate continuity of the captured images and can facilitate stitching together of slice images into a combined slice image. Once the inspection cart 100 is arranged relative to a slice of the fuselage 400, e.g., at a suitable standoff, scanning of the slice can commence.

At 306, the method 300 can include translating a 3D scanner relative to a target object. For instance, once the inspection cart 100 is arranged relative to a slice of the fuselage 400 at 304, the 3D scanner 134 can be translated, e.g., along the translation path TP. Specifically, the electric motor 164 can be activated to drive the gearbox 166, which in turn drives a belt of the belt pulley system 168. When the belt is driven, the carriage 132 that carries the 3D scanner 134 can be moved along the track 154, or rather, along the translation path TP. Accordingly, the 3D scanner 134 is translated. The 3D scanner 134 can start at one end of the track 154 and translate to the other end of the track, for example. Alternatively, the 3D scanner 134 can be moved along the translation path TP from a predetermined starting position to a predetermined ending position.

At 308, the method 300 can include scanning, as the 3D scanner is translated at 306, a target object using the 3D scanner to capture images of at least a slice of the target object, wherein optical fiducials integrated into the inspection cart are arranged in a FOV of the 3D scanner during the scanning. For instance, the projector 191 of the 3D scanner 134 can project light onto the fuselage 400. With the light projected onto fuselage 400, the first and second cameras 192, 193 can capture images of at least a slice of the fuselage 400 as the 3D scanner 134 is translated. A plurality of images can be captured for a given slice. Further, as the first and second cameras 192, 193 capture the images, the first and second fiducial rails 174, 176 and the first and second fingers 188, 190 are arranged in the FOV of the 3D scanner 134, and as a result, these items are present in the captured images.

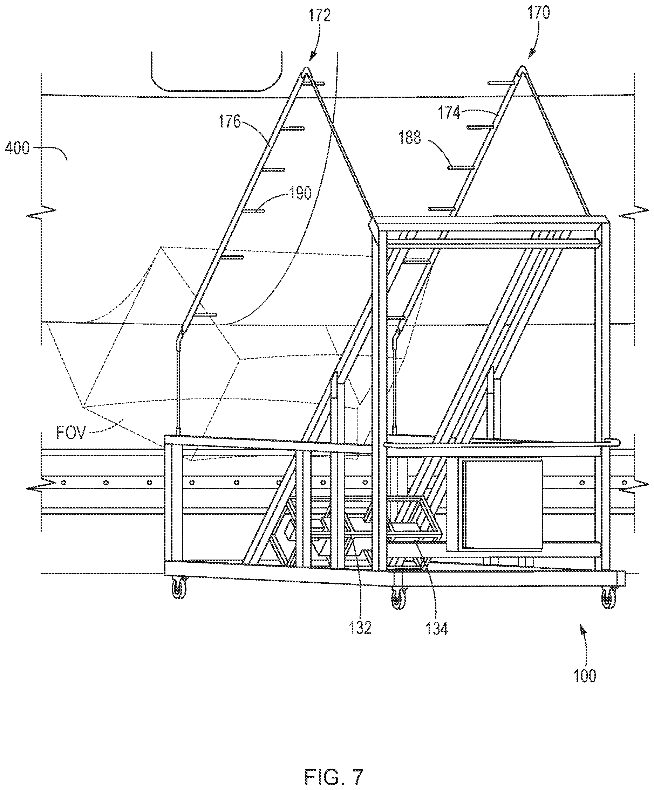

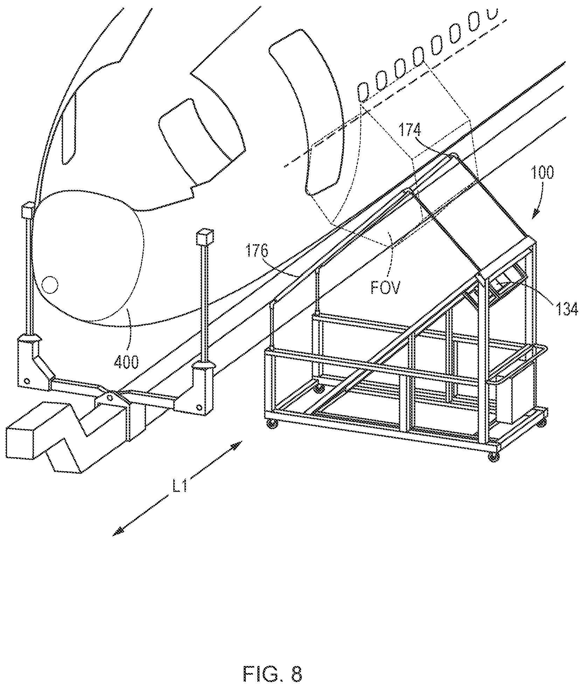

By way of example, FIG. 7 depicts the inspection cart 100 positioned relative to a slice of a port side of the fuselage 400 (e.g., the third slice S3 of the fuselage 400 in FIG. 6). As shown in FIG. 7, the projector 191 of the 3D scanner 134 is projecting light onto the underbelly of the fuselage 400 and the 3D scanner 134 is positioned at a bottom position along the track 154 (FIG. 1). The FOV of the first and second cameras 192, 193 is labeled in FIG. 7 as "FOV". Notably, the optical fiducials 170, 172 are arranged within the FOV, and therefore, the position targets 186 (FIG. 2) are also in the FOV. The first and second cameras 192, 193 can capture images of the fuselage 400 as the 3D scanner 134 is translated along the track 154, or rather, the translation path TP (FIG. 3). The 3D scanner 134 can capture images of the fuselage 400, e.g., at a predefined interval, upon sensing a given position target, etc. Eventually the 3D scanner 134 reaches an end of the track 154 or a predefined position. As shown in FIG. 8, the 3D scanner 134 is shown at a top position along the track 154. In this regard, the 3D scanner 134 has traversed from the bottom position (FIG. 7) to the top position (FIG. 8) along the translation path TP capturing images along the way. In FIG. 8, the FOV is at or just above a window line WL of the fuselage 400, which extends along the longitudinal direction L1 defined by the fuselage 400. Accordingly, for the scan of the slice of the fuselage 400 in FIGS. 7 and 8, the fuselage 400 is scanned so that the captured images of the slice extend from a midline of an underbelly of the fuselage 400 to the window line WL of the fuselage 400. In this regard, the scanned slice is a slice of the port side, bottom quadrant of the fuselage 400.

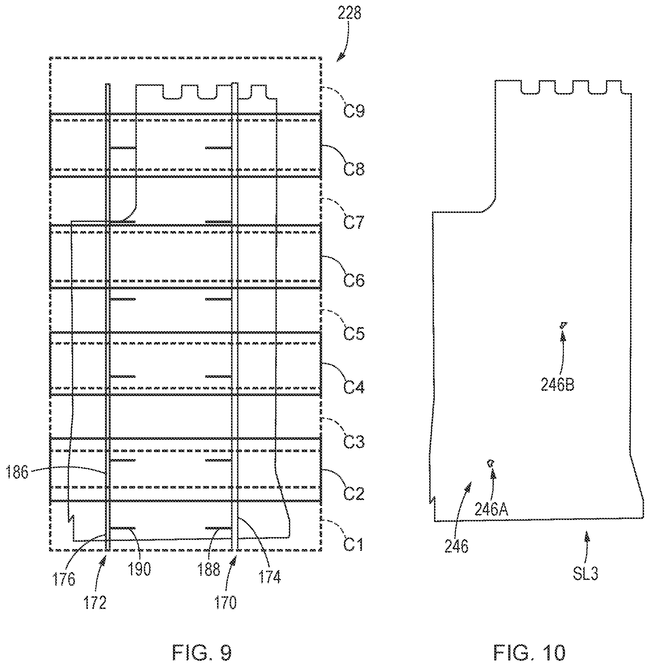

As the 3D scanner 134 is translated along the track 154 as shown in FIGS. 7 and 8, images of the fuselage 400 are captured by the first and second cameras 192, 193. The captured images 228 are depicted in FIG. 9. Particularly, with the 3D scanner 134 at a first position, e.g., at the bottom of the track 154 as shown in FIG. 7, a first image C1 of the fuselage 400 can be captured. Then, with the 3D scanner 134 at a second position along the track 154, which is different than the first position, a second image C2 of the fuselage 400 can be captured. Next, with the 3D scanner 134 at a third position along the track 154, which is different than the first and third positions, a third image C3 of the fuselage 400 can be captured. This process can continue for subsequent image captures, e.g., for a fourth image C4, a fifth image C5, a sixth image C6, a seventh image C7, an eighth image C8, and a ninth image C9. The ninth image C9 can be captured by the first and second cameras 192, 193 when the 3D scanner 134 is positioned at the top of the track 154, e.g., as shown in FIG. 8. In the captured images C1-C9, the first and second fiducial rails 174, 176 and first and second fingers 188, 190 thereof are depicted, and as a result, the position targets 186 are also in the captured images C1-C9. The position targets 186 can be used for stitching the captured images 228 together at 310. In other examples, more or less than nine (9) images can be captured during a scan of a slice of the fuselage 400.

At 310, the method 300 can include stitching together the captured images of the target object obtained during the scanning to create a slice image, the captured images being stitched together according to position targets provided by the optical fiducials. For instance, the one or more processors 212 of the computing system 210 can execute the image stitching container 224 so that the captured images 228, e.g., images C1-C9 in FIG. 9, are stitched together. The arrangement of the position targets 186 within the captured images 228 can be identified so that the position of the 3D scanner 134 can be determined. As noted previously, the position targets 186 can be uniquely arranged on the first and second fiducial rails 174, 176 and/or the first and second fingers 188, 190 (e.g., in unique patterns) so that their locations can be easily identified, which can facilitate quick processing of the position of the 3D scanner 134. Based on the known position of the 3D scanner 134, the captured images 228 can be stitched together to form a slice image SL3 as shown in FIG. 10. The slice image SL3 can represent the full image of the third slice S3, for example. Notably, the first and second optical fiducials 170, 172 and first and second fingers 188, 190 can be removed from or masked in the slice image SL3. For instance, as stereo vision is obtained through multiple positions, the first and second optical fiducials 170, 172 and first and second fingers 188, 190 can be filtered out of the slice image SL3.

At 312, the method 300 can include detecting one or more defects on the target object based on the slice image. For instance, the one or more processors 212 of the computing system 210 can execute the defect detection container 226 so that the slice of the fuselage 400 in the slice image SL3 of FIG. 10 can be analyzed for defects. As shown in FIG. 10, for this example, defects 246 have been detected for this slice of the fuselage 400, including a first defect 246A and a second defect 246B. In executing the defect detection container 226, the one or more processors 212 can ignore known features so as not to identify them as defects. For instance, in executing the defect detection container 226, the one or more processors 212 can receive data indicating positions of known features in the fuselage 400 that may appear as defects, such as window cutouts, door cutouts, rivets, etc. The data can be processed to ensure that such known features are not identified as defects.

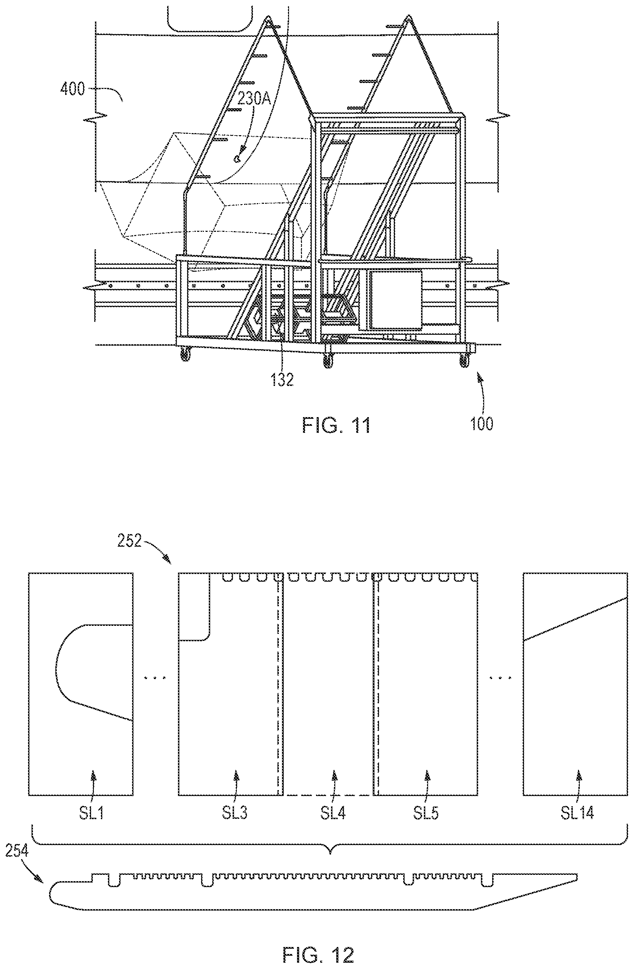

At 314, the method 300 can include projecting, by the 3D scanner, one or more defect indicators onto the target object to indicate respective ones of the one or more defects detected on the target object. In at least some examples, the coordinates of the defects detected 246 can be determined and defect indicators 230 can be generated corresponding to the coordinates of the detected defects 246. The computing system 210 can cause the projector 191 of the 3D scanner 134 to project the defect indicators 230 onto the target object, e.g., with cross hairs, arrows, circles, etc. In some examples, the defects 246 can be classified into one of a plurality of defect types, e.g., defect type 1, defect type 2, etc., and the defect indicators projected onto the fuselage 400 can be projected with a color associated with the defect type to which the defect has been classified. In some examples, at least one defect indicator can be projected onto the fuselage 400 outlining a defect. Stated another way, the projected defect indicator can outline a perimeter of the defect, which can make an area of a defect readily apparent to an operator reviewing the defects on the fuselage 400. By way of example, FIG. 11 shows a first defect indicator 230A being projected by the projector 191 of the 3D scanner 134 onto the fuselage 400. The first defect indicator 230A projected onto the fuselage 400 corresponds to the first detected defect 246A illustrated in FIG. 10. The first defect indicator 230A outlines a perimeter of the first detected defect 246A, making an area of the first detected defect 246A readily apparent to an operator. The 3D scanner 134 can be translated along the track 154 so that defect indicators 230 corresponding to each one of the detected defects 246 can be projected onto the fuselage 400.

In some examples, the operations 312 and 314 can be completed at a later stage, such as after each slice of the fuselage 400 has been scanned and the slice images stitched together into a combined slice image.

At 316, the method 300 can include determining whether each relevant slice of the target object has been scanned, e.g., according to operations 302 through 314. When each relevant slice has not been scanned, the method 300 can iterate to 302 so that a subsequent slice or slices can be scanned. When each relevant slice has been scanned, the method 300 can proceed to 318. For instance, when slices S1-S14 (FIG. 6) of the fuselage 400 have been scanned, or from nose to tail, the method 300 can proceed to 318. Accordingly, operations 302 through 314 can be iterated for a predetermined length of the target object, e.g., a full longitudinal length of the fuselage 400.

At 318, the method 300 can include stitching the slice images into a combined slice image. For instance, the one or more processors 212 of the computing system 210 can stitch the slice images together into a combined slice image. By way of example, FIG. 12 shows a plurality of slice images 252 each associated with one of the predefined slices of the fuselage 400. Slice images SL1, SL3, SL4, SL5, and SL14 associated with slices S1, S3, S4, S5, and S14 are shown in FIG. 12 but it will be appreciated that slice images SL1 through SL14 can be stitched together to form the combined slice image 254. In at least some examples, the slices are defined with a smaller width than the FOV of the 3D scanner 134, e.g., so that the slice images overlap, which can be advantageous for stitching the slice images together into a combined slice image.

At 320, the method 300 can include creating a second combined slice image associated with the second side of the target object, wherein the combined slice image created at 318 is a first combined slice image associated with a first side of the target object. For instance, the combined slice image 254 can be a first combined slice image 254 associated with a first side of the fuselage 400 (e.g., a port side). A second combined slice image associated with a second side of the fuselage 400 (e.g., a starboard side) can be created, e.g., using operations 302 through 318. The second combined slice image can be generated having a same or similar shape as the fuselage 400 in the first combined slice image 254 presented in FIG. 12, except the second combined slice image will identify defects, if any, associated with the second side of the fuselage 400.

At 322, the method 300 can include storing the combined slice image and/or combined slice images in a data repository. For instance, the first combined slice image 254 (and in some instances the second combined slice image and others) can be stored in the data repository, e.g., on one more non-transitory memory devices thereof. The images can be stored for analysis purposes. For example, the predictive assembly system 240 can call or receive captured and/or stitched images, and with defects identified, the predictive assembly system 240 can provide one or more assembly predictions 242. An assembly prediction can provide an instruction for how to fix a detected defect, such as by providing instructions for how to machine a surface, build a shim for strengthening a joint, fasten a rivet according to specification, how to rework a particular area to remove a dent, etc. In this regard, an integrated approach to inspection and assembly can be achieved.

At 324, the method 300 can include creating a digital twin of the target object based at least in part on the first combined slice image, and in some instances, one or more other combined slice images. For instance, the one or more processors 212 of the computing system 210 can execute the digital twin creator 232 to create a digital twin 234 of the fuselage 400. The created digital twin 234 can identify the detected defects on the fuselage 400. The digital twin 234 can be used for a number of purposes, such as providing a baseline assessment of the fuselage 400 at final assembly, which can be compared to future scans of the fuselage 400 (e.g., after rework, at delivery, after being fielded, etc.). The combined slice image or images can be called from the data repository 238 or the memory devices 214, for example.

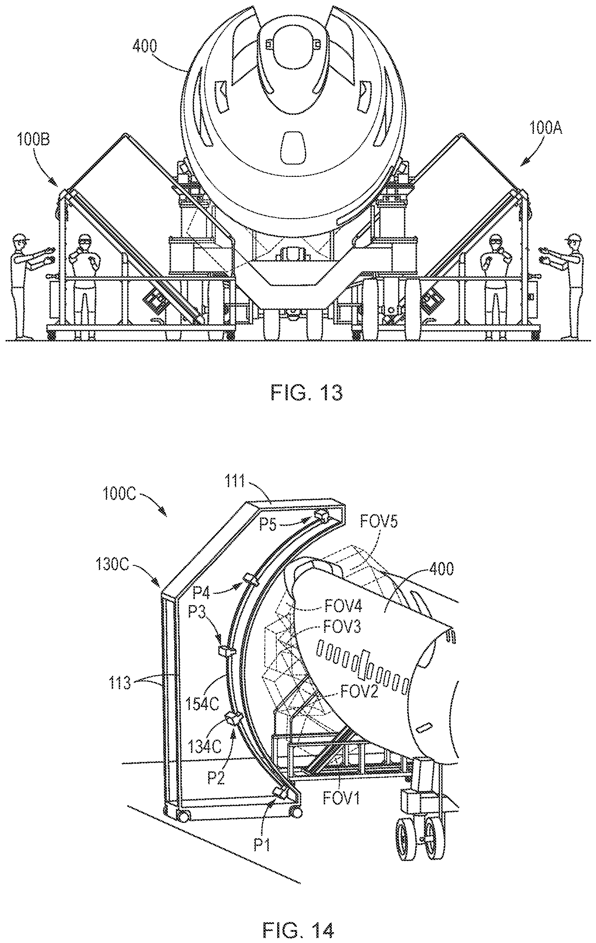

In some examples, to facilitate additional efficiency in inspecting a fuselage, the inspection system 200 can include at least one inspection cart associated with a first side (e.g., a port side) of the fuselage 400, and at least one inspection cart associated with a second side (e.g., a starboard side) of the fuselage 400. For instance, FIG. 13 depicts a forward-looking-aft view of the fuselage 400 and shows a first inspection cart 100A scanning and capturing images of various slices of a port side of the fuselage 400 to detect defects thereon and also a second inspection cart 100B scanning and capturing images of various slices of a starboard side of the fuselage 400 to detect defects thereon. The first and second inspection carts 100A, 100B can be configured and operate in a similar manner as the inspection cart 100 described herein. In some examples, the first and second inspection carts 100A, 100B can perform examples of the method 300 simultaneously, which can provide additional efficiency for inspecting the fuselage 400 for defects.

In yet other examples, an inspection cart of the inspection system 200 can have a "siege tower" that enables a fuselage to be scanned so that the captured images of a given slice extend at least from a midline of an underbelly of the fuselage to a midline of a top of the fuselage.

By way of example, FIG. 14 is a perspective view of an inspection cart 100C having a siege tower in a scanner/motivator configuration. The inspection cart 100C includes a tower 130C that supports a track 154C along which a 3D scanner 134C can translate. The 3D scanner 134C can be carried by a carriage, for example. The track 154C is non-linear, or in this example, curved complementary to the shape of the fuselage 400. In this regard, the translating path of the 3D scanner 134C is also curved or non-linear. The track 154C is connected at its top end by a roof 111. The roof 111 is supported by aft posts 113. Although not shown in FIG. 14, curved optical fiducial rails shaped complementary to the track 154C can be provided so that position targets are within the FOV of the 3D scanner 134C.

In FIG. 14, a sequence showing one example manner in which the 3D scanner 134C can be translated is illustrated. In a first position P1, the 3D scanner 134C has a first field of view FOV1 and captures an image of a portion of the underbelly of the fuselage 400. In a second position P2, the 3D scanner 134C has a second field of view FOV2 and captures an image of a lower quadrant of the fuselage 400. In a third position P3, the 3D scanner 134C has a third field of view FOV3 and captures an image of a side of the fuselage 400. In a fourth position P4, the 3D scanner 134C has a fourth field of view FOV4 and captures an image of an upper quadrant of the fuselage 400. In a fifth position P5, the 3D scanner 134C has a fifth field of view FOV5 and captures an image of a top side of the fuselage 400. Accordingly, the inspection cart 100C is arranged to capture images of a given slice of the fuselage 400 at least from a midline of an underbelly of the fuselage 400 to a midline of a top of the fuselage 400. In this regard, a slice image created from the images can be representative of a lower quadrant and upper quadrant of a side of the fuselage 400. This scan range can facilitate additional efficiency in inspecting a fuselage and can allow for detection of defects on both the lower and upper quadrants of a fuselage.

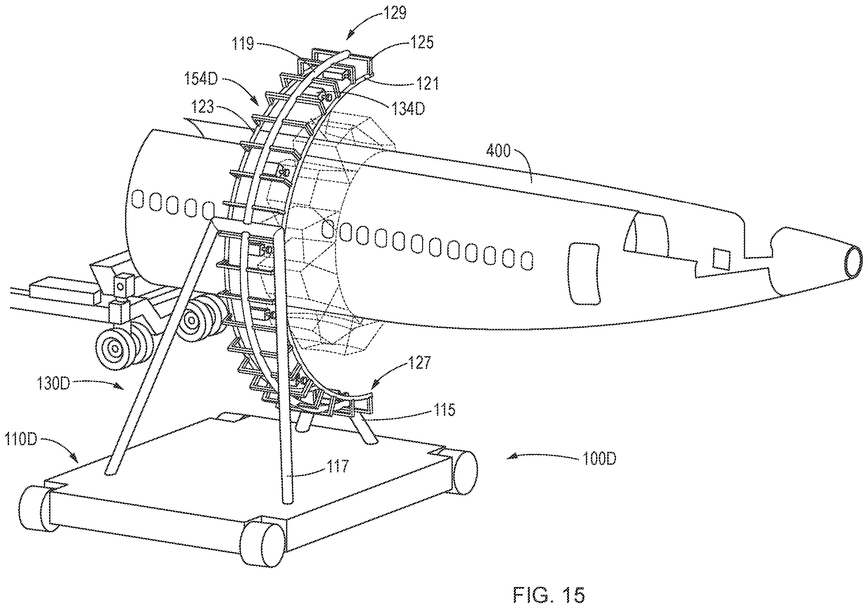

FIG. 15 is a perspective view of an inspection cart 100D having a siege tower in a rollercoaster-style conveyer configuration. The inspection cart 100D includes a tower 130D that supports a track 154D along which a 3D scanner 134D can translate. The 3D scanner 134D is shown in different positions along the track 154D in FIG. 15. The 3D scanner 134D can be carried by a carriage, for example. The track 154D is non-linear, or in this example, curved complementary to the shape of the fuselage 400. In this regard, the translating path of the 3D scanner 134D is also curved or non-linear. The track 154D is supported by a forward brace 115 and by an aft brace 117. The forward brace 115 and the aft brace 117 are supported by a chassis 110D. The track 154D has a backbone 119, first and second load rails 121, 123 along which the carriage or 3D scanner 134D translates, and load rails supports 125 that connect the first and second load rails 121, 123 with the backbone 119 and provide support thereto. The track 154D is uniquely arranged to accommodate relatively large fuselages, and accordingly, when the inspection cart 100D is in position relative to the fuselage 400, a lower end 127 of the track 154D is arranged under the fuselage 400 and the upper end 129 is arranged above the fuselage 400. In this regard, the track 154D "wraps" around a part of the fuselage 400. Although not shown in FIG. 15, curved optical fiducial rails shaped complementary to the track 154D can be provided so that position targets are within the FOV of the 3D scanner 134D.

The inspection cart 100D is arranged to capture images of a given slice of the fuselage 400 at least from a midline of an underbelly of the fuselage 400 to a midline of a top of the fuselage 400. In this regard, a slice image created from the images can be representative of a lower quadrant and an upper quadrant of a side of the fuselage 400. This scan range can facilitate additional efficiency in inspecting a fuselage and can allow for detection of defects on both the lower and upper quadrants of a fuselage. In at least some examples, the inspection cart 100D can be an Automated Guided Vehicle (AGV). In such examples, the inspection cart 100D can move itself autonomously from one scan position to the next.

In the current disclosure, reference is made to various examples. However, it should be understood that the present disclosure is not limited to specific described examples. Instead, any combination of the following features and elements, whether related to different examples or not, is contemplated to implement and practice the teachings provided herein. Additionally, when elements of the examples are described in the form of "at least one of A and B," it will be understood that examples including element A exclusively, including element B exclusively, and including element A and B are each contemplated. Furthermore, although some examples may achieve advantages over other possible solutions and/or over the prior art, whether or not a particular advantage is achieved by a given example is not limiting of the present disclosure. Thus, the examples, features and advantages disclosed herein are merely illustrative and are not considered elements or limitations of the appended claims except where explicitly recited in a claim(s).

As will be appreciated by one skilled in the art, examples described herein may be embodied as a system, method or computer program product. Accordingly, examples may take the form of entirely hardware examples, entirely software examples (including firmware, resident software, micro-code, etc.) or examples combining software and hardware that may all generally be referred to herein as a "circuit," "module" or "system." Furthermore, examples described herein may take the form of a computer program product embodied in one or more computer readable storage medium(s) having computer readable program code embodied thereon.

Program code embodied on a computer readable storage medium may be transmitted using any appropriate medium, including but not limited to wireless, wireline, optical fiber cable, RF, etc., or any suitable combination of the foregoing.

Computer program code for carrying out operations for examples of the present disclosure may be written in any combination of one or more programming languages, including an object oriented programming language such as Java, Smalltalk, C++ or the like and conventional procedural programming languages, such as the "C" programming language or similar programming languages. The program code may execute entirely on the user's computer, partly on the user's computer, as a stand-alone software package, partly on the user's computer and partly on a remote computer or entirely on the remote computer or server. In the latter scenario, the remote computer may be connected to the user's computer through any type of network, including a local area network (LAN) or a wide area network (WAN), or the connection may be made to an external computer (for example, through the Internet using an Internet Service Provider).

Examples of the present disclosure are described herein with reference to flowchart illustrations and/or block diagrams of methods, apparatuses (systems), and computer program products. It will be understood that each block of the flowchart illustrations and/or block diagrams, and combinations of blocks in the flowchart illustrations and/or block diagrams, can be implemented by computer program instructions. These computer program instructions may be provided to a processor of a general purpose computer, special purpose computer, or other programmable data processing apparatus to produce a machine, such that the instructions, which execute via the processor of the computer or other programmable data processing apparatus, create means for implementing the functions/acts specified in the block(s) of the flowchart illustrations and/or block diagrams.

These computer program instructions may also be stored in a computer readable medium that can direct a computer, other programmable data processing apparatus, or other device to function in a particular manner, such that the instructions stored in the computer readable medium produce an article of manufacture including instructions which implement the function/act specified in the block(s) of the flowchart illustrations and/or block diagrams.

The computer program instructions may also be loaded onto a computer, other programmable data processing apparatus, or other device to cause a series of operational steps to be performed on the computer, other programmable apparatus or other device to produce a computer implemented process such that the instructions which execute on the computer, other programmable data processing apparatus, or other device provide processes for implementing the functions/acts specified in the block(s) of the flowchart illustrations and/or block diagrams.

The flowchart illustrations and block diagrams in the Figures illustrate the architecture, functionality, and operation of possible examples of systems, methods, and computer program products. In this regard, each block in the flowchart illustrations or block diagrams may represent a module, segment, or portion of code, which comprises one or more executable instructions for implementing the specified logical function(s). It should also be noted that, in some alternative examples, the functions noted in the block may occur out of the order noted in the Figures. For example, two blocks shown in succession may, in fact, be executed concurrently or substantially concurrently, or the blocks may sometimes be executed in the reverse order or out of order, depending upon the functionality involved. It will also be noted that each block of the block diagrams and/or flowchart illustrations, and combinations of blocks in the block diagrams and/or flowchart illustrations, can be implemented by special purpose hardware-based systems that perform the specified functions or acts, or combinations of special purpose hardware and computer instructions.

Further examples are set forth in the following clauses.

Clause 1. A method (300), comprising: translating (306) a 3D scanner (134) relative to a target object (400), the 3D scanner (134) is arranged in an inspection cart (100); scanning (308), as the 3D scanner (134) is translated, the target object (400) using the 3D scanner (134) to capture images (228) of at least a slice of the target object (400), wherein optical fiducials (170, 172) integrated into the inspection cart (100) are arranged in a field of view (FOV) of the 3D scanner (134) during the scanning; stitching (310) together the captured images (228) of the target object (400) obtained during the scanning (308) to create a slice image (SL3), the captured images (228) being stitched together according to position targets (186) provided by the optical fiducials (170, 172); and detecting (312) one or more defects (246) on the target object (400) based on the slice image (SL3).

Clause 2. The method (300) of clause 1, further comprising: projecting (314), by the 3D scanner (134), one or more defect indicators (230) onto the target object (400) to indicate respective ones of the one or more defects (246) detected on the target object (400).

Clause 3. The method (300) of clause 2, wherein at least one defect indicator of the one or more defect indicators (230) is projected onto the target object (400) outlining a defect of the one or more defects (246) detected on the target object (400).

Clause 4. The method (300) of any of Clauses 1 to 3, wherein the 3D scanner (134) is translated along a linear path (TP) that is oriented at an angle relative to a vertical direction (V).

Clause 5. The method (300) of clause 4, wherein the optical fiducials (170, 172) include a first fiducial rail (170) and a second fiducial rail (172) that are spaced from one another and arranged parallel to the linear path (TP).

Clause 6. The method (300) of clause 5, wherein the position targets (186) are arranged on first fingers (188) that extend from the first fiducial rail (170) and on second fingers (190) that extend from the second fiducial rail (172), the first fingers (188) are spaced from one another along the first fiducial rail (170) and the second fingers (190) are spaced from one another along the second fiducial rail (172).

Clause 7. The method (300) of any of Clauses 1 to 6, further comprising: masking the optical fiducials (170, 172) in the slice image (SL3) so that the optical fiducials (170, 172) do not appear on the slice image (SL3).

Clause 8. The method (300) of any of clauses 1 to 7, wherein the slice of the target object (400) is a first slice, and wherein the method (300) further comprises: a) moving (302) the inspection cart (100) so that the inspection cart (100) aligns with a subsequent slice of the target object (400); b) translating (306), with the inspection cart (100) aligned with the subsequent slice, the 3D scanner (134) relative to the target object (400); c) scanning (308), as the 3D scanner (134) is translated with the inspection cart (100) aligned with the subsequent slice, the target object (400) using the 3D scanner (134) to capture images (228) of the subsequent slice of the target object (400), wherein the optical fiducials (170, 172) are arranged in the field of view (FOV) of the 3D scanner (134) during the scanning of the subsequent slice; d) stitching (310) together captured images (228) of the subsequent slice of the target object (400) to create a subsequent slice image (SL3), the captured images (228) of the subsequent slice being stitched together according to the position targets (186) provided by the optical fiducials (170, 172); and e) detecting (312) one or more defects (246) on the subsequent slice of the target object (400) based on the subsequent slice image (SL3).

Clause 9. The method (300) of clause 8, further comprising: iterating a) through e) for a predetermined length of the target object (400); and stitching (318) the slice image (SL3) of the first slice and subsequent slice image (SL3) of each one of the subsequent slices into a combined slice image (SL3).

Clause 10. The method (300) of clause 9, wherein the combined slice image (SL3) is a first combined slice image (SL3) associated with a first side of the target object (400), and wherein the method (300) further comprises: creating (320) a second combined slice image (SL3) associated with a second side of the target object (400).

Clause 11. The method (300) of clause 10, further comprising: creating (324) a digital twin (234) of the target object (400) based at least in part on the first combined slice image (SL3) and the second combined slice image (SL3).

Clause 12. The method (300) of any of clauses 8 to 11, wherein the inspection cart (100) moves autonomously from one slice of the target object (400) to another.

Clause 13. The method (300) of any of clauses 1 to 12, wherein the target object (400) is a fuselage (400), and wherein the fuselage (400) is scanned so that the captured images (228) of the slice extend from a midline of an underbelly of the fuselage (400) to a window line (WL) of the fuselage (400).

Clause 14. The method (300) of any of clauses 1 to 12, wherein the target object (400) is a fuselage (400), and wherein the fuselage (400) is scanned so that the captured images (228) of the slice extend from a midline of an underbelly of the fuselage (400) to a midline of a top of the fuselage (400).

Clause 15. An inspection system (200), comprising: an inspection cart (100), comprising: a tower (130) supporting a track (154); a carriage (132) movable along the track (154), the carriage (132) supporting a 3D scanner (134) having at least two cameras (192, 193) and a projector (191); and optical fiducials (170, 172) arranged relative to the track (154) so that the optical fiducials (170, 172) are in a field of view (FOV) of the 3D scanner (134) during scanning of a target object (400).

Clause 16. The inspection system (200) of clause 15, further comprising: one or more processors (212) and one or more non-transitory memory devices (214) storing a program, which, when executed by any combination of the one or more processors (212), causes the one or more processors (212) to perform an operation, the operation comprising: causing the carriage (132) to move along the track (154) so that the 3D scanner (134) is moved relative to the target object (400); causing, as the 3D scanner (134) is translated, the 3D scanner (134) to scan the target object (400) to capture images (228) of at least a slice of the target object (400); stitching together the captured images (228) of the slice of the target object (400) to create a slice image (SL3), the captured images (228) being stitched together according to position targets (186) provided by the optical fiducials (170, 172); and detecting one or more defects (246) on the target object (400) based on the slice image (SL3).

Clause 17. The inspection system (200) of clause 16, wherein the operation further comprises: causing the projector (191) of the 3D scanner (134) to project one or more defect indicators (230) onto the target object (400) to indicate respective ones of the one or more defects (246) detected on the target object (400).

Clause 18. The inspection system (200) of any of clauses 15 to 17, wherein the track (154) is a linear track (154) and the optical fiducials (170, 172) include a first fiducial rail (170) and a second fiducial rail (172) that are spaced from one another and arranged parallel to the linear track (154).

Clause 19. The inspection system (200) of any of clauses 15 to 18, wherein the target object (400) is a fuselage (400), and wherein the track (154) is a curved track (154D) that extends above and below the fuselage (400).

Clause 20. An inspection cart (100), comprising: a tower (130) supporting a track (154); a carriage (132) movable along the track (154), the carriage (132) supporting a 3D scanner (134) having at least two cameras (192, 193) and a projector (191); and optical fiducials (170, 172) arranged relative to the track (154) so that the optical fiducials (170, 172) are in a field of view (FOV) of the 3D scanner (134) during scanning of a target object (400).

While the foregoing is directed to examples of the present disclosure, other and further examples of the disclosure may be devised without departing from the basic scope thereof, and the scope thereof is determined by the claims that follow.

## Claims

1. A method (300), comprising:
translating (306) a 3D scanner (134) relative to a target object (400), the 3D scanner (134) is arranged in an inspection cart (100);
scanning (308), as the 3D scanner (134) is translated, the target object (400) using the 3D scanner (134) to capture images (228) of at least a slice of the target object (400), wherein optical fiducials (170, 172) integrated into the inspection cart (100) are arranged in a field of view (FOV) of the 3D scanner (134) during the scanning;
stitching (310) together the captured images (228) of the target object (400) obtained during the scanning (308) to create a slice image (SL3), the captured images (228) being stitched together according to position targets (186) provided by the optical fiducials (170, 172); and
detecting (312) one or more defects (246) on the target object (400) based on the slice image (SL3).

2. The method (300) of claim 1, further comprising:
projecting (314), by the 3D scanner (134), one or more defect indicators (230) onto the target object (400) to indicate respective ones of the one or more defects (246) detected on the target object (400); and, optionally,
wherein at least one defect indicator of the one or more defect indicators (230) is projected onto the target object (400) outlining a defect of the one or more defects (246) detected on the target object (400).

3. The method (300) of claim 1 or 2, wherein the 3D scanner (134) is translated along a linear path (TP) that is oriented at an angle relative to a vertical direction (V).

4. The method (300) of claim 3, wherein the optical fiducials (170, 172) include a first fiducial rail (170) and a second fiducial rail (172) that are spaced from one another and arranged parallel to the linear path (TP).

5. The method (300) of claim 4, wherein the position targets (186) are arranged on first fingers (188) that extend from the first fiducial rail (170) and on second fingers (190) that extend from the second fiducial rail (172), the first fingers (188) are spaced from one another along the first fiducial rail (170) and the second fingers (190) are spaced from one another along the second fiducial rail (172).

6. The method (300) of any preceding claim, further comprising:
masking the optical fiducials (170, 172) in the slice image (SL3) so that the optical fiducials (170, 172) do not appear on the slice image (SL3).

7. The method (300) of any preceding claim, wherein the slice of the target object (400) is a first slice, and wherein the method (300) further comprises:
a) moving (302) the inspection cart (100) so that the inspection cart (100) aligns with a subsequent slice of the target object (400);
b) translating (306), with the inspection cart (100) aligned with the subsequent slice, the 3D scanner (134) relative to the target object (400);
c) scanning (308), as the 3D scanner (134) is translated with the inspection cart (100) aligned with the subsequent slice, the target object (400) using the 3D scanner (134) to capture images (228) of the subsequent slice of the target object (400), wherein the optical fiducials (170, 172) are arranged in the field of view (FOV) of the 3D scanner (134) during the scanning of the subsequent slice;
d) stitching (310) together captured images (228) of the subsequent slice of the target object (400) to create a subsequent slice image (SL3), the captured images (228) of the subsequent slice being stitched together according to the position targets (186) provided by the optical fiducials (170, 172); and
e) detecting (312) one or more defects (246) on the subsequent slice of the target object (400) based on the subsequent slice image (SL3).

8. The method (300) of claim 7, further comprising:
iterating a) through e) for a predetermined length of the target object (400); and
stitching (318) the slice image (SL3) of the first slice and subsequent slice image (SL3) of each one of the subsequent slices into a combined slice image (SL3).

9. The method (300) of claim 8, wherein:
the combined slice image (SL3) is a first combined slice image (SL3) associated with a first side of the target object (400);
the method (300) further comprises creating (320) a second combined slice image (SL3) associated with a second side of the target object (400) and, optionally, creating (324) a digital twin (234) of the target object (400) based at least in part on the first combined slice image (SL3) and the second combined slice image (SL3).

10. The method (300) of any of claims 7 to 9, wherein the inspection cart (100) moves autonomously from one slice of the target object (400) to another.

11. The method (300) of any preceding claim, wherein:
the target object (400) is a fuselage (400), and
the fuselage (400) is scanned so that the captured images (228) of the slice extend from a midline of an underbelly of the fuselage (400) either to a window line (WL) of the fuselage (400) or to a midline of a top of the fuselage (400).

12. An inspection system (200), comprising:
an inspection cart (100), comprising:
a tower (130) supporting a track (154);
a carriage (132) movable along the track (154), the carriage (132) supporting a 3D scanner (134) having at least two cameras (192, 193) and a projector (191); and
optical fiducials (170, 172) arranged relative to the track (154) so that the optical fiducials (170, 172) are in a field of view (FOV) of the 3D scanner (134) during scanning of a target object (400).

13. The inspection system (200) of claim 12, further comprising:
one or more processors (212) and one or more non-transitory memory devices (214) storing a program, which, when executed by any combination of the one or more processors (212), causes the one or more processors (212) to perform the method of any of claims 1 to 11.

14. The inspection system (200) of claim 12 or 13, wherein the track (154) is a linear track (154) and the optical fiducials (170, 172) include a first fiducial rail (170) and a second fiducial rail (172) that are spaced from one another and arranged parallel to the linear track (154).

15. The inspection system (200) of any of claims 12 to 14, wherein the track (154) is a curved track (154D).
